# EUROPEAN PATENT APPLICATION

(11) **EP 2 230 290 A2**
(43) Date of publication of application: **22.09.2010**
(21) Application number: 09180691.9
(22) Date of filing: 23.12.2009
(51) Int. Cl.: C10G 1/00, B29B 17/02

(54) **Method of degradation of plastics and apparatus thereof.**

(30) Priority: 23.12.2008 PL 38687708
(71) Applicant: Firma Posiadalo Spólka Jawna, 97-225 Ujazd (PL)
(72) Inventor: Posiadato, Stawomir, 97-225 Ujazd (PL)
(74) Representative: Rumpel, Alicja

(57) **Abstract**

The method and apparatus of degradation of plastics, the method consisting in that not purified and not segregated raw-material - plastic waste - is being grinded, and the charge material received as a result of grinding, with continuous feeding is being introduced into the volume feeder (8), which then with continuous feeding doses the charge material on the conveyor (10) situated in the chamber (3) of the degradation machine (1), the conveyor (10) relocates plastic under the area of heating (6), and its speed is adjusted in such a way that plastic waste under degradation at any moment do not contact the heater surface and/or the assembly of heaters and/or the wall of the chamber (3) of the degradation machine (1). The relocated plastic is subjected to plasticization and changes its state of aggregation, and hydrocarbon particles contained in it change their state of aggregation into liquid, and next - gaseous one, and are then passed into the distillation column (2), and organic and inorganic impurities contained in the charge mass as well as coked plastic are being removed from the conveyor (10) into the waste tank (18).

## Description

The subject-matter of the invention is the method of degradation of plastics, and the plant for degradation of plastics.

After expiry of service life of the product containing plastics it usually ends up on a dumping ground for wastes where it is then stored. A long time of decay in the case of such wastes is connected with the necessity to arrange more and more space for their storage, what apparently creates not only financial but also social problems. The invention in question refers the method of hydrocarbons recovery from the used plastics.

Processing of wastes containing plastics as an alternative solution for waste storage, has been referred to in many studies.

According to the information as made available by the Institute of Chemistry and Technology of Petroleum and Coal, Wroclaw University of Technology, the pilot demonstration plant for polyolefines degradation into fuels is known, which includes feeding, cracking and hydro-refining. Plastic being a charge material undergoes combustion in a special kiln and then - the process of pyrolysis (thermal decomposition) in order to be decomposed into monomers. Alternatively, catalytic or thermal cracking can be applied instead of pyrolysis. In the said pilot plant plastic delivered for the process must be pre-purified to avoid damaging of the extruder used to plasticize and convert this plastic into pellets. The above requirement creates the essential limitation, especially as far as industrial applications of such plants are considered, which are supposed to process large volumes of waste material, including also contaminated material.

According to the Polish patent application P 314409, the method of plastic waste recycling is known, following which plastic purified from mechanical impurities is being grinded and then fused with macromolecular compounds and organic peroxides.
The processed plastic respectively forms a filler within a structure of the new product.

Moreover, according to the Polish patent application P 339821, the method of hydrocarbons production based on plastics is known, in which pre-selected and pre-purified waste is heated in mass up to the temperature of 320-400 °C under the pressure of 0.008-3.5 MPa, and the received semi-product is then separated under the same conditions, by means of distillation.

According to the patent description P-352341, the method of continuous processing of plastic waste is also known, in which a charge portion loaded into the process is plasticized, brought to the liquid state, transformed catalytically, and next - in its gaseous form - it is liquefied in the cooler.

The method of degradation of plastics and the plant for degradation of plastics eliminate the necessity of preliminary segregation of waste from plastic waste as well as the necessity to use any catalyst. Moreover, the invention enables processing of plastic waste without necessity of frequent stoppages of the process with the purpose to clean the plant from residues resulted from degradation, and accumulated inside the plant.

The method of degradation of plastics according to the invention consists in that in the first stage not purified and not segregated raw-material - plastic waste - is being grinded. Grinding process is carried out in the cutting shredder of any kind, preferably - in a twin-shaft shredder. The charge material received as a result of grinding, with continuous feeding is being introduced into a volume feeder. Preferably, when such feeder cuts down access of oxygen into a chamber of the degradation machine, which is connected with the feeder. Preferably, the feeder itself enables simultaneous loading of the feeder along with feeding of the charge material contained in it.

In another example of making, the volume feeder is fed from a volume forefeeder, situated directly above the feeder. The volume forefeeder is connected with the volume feeder hermetically, and preferably into the area where plastic is fed into the feeder, a neutral gas is being introduced, preferably nitrogen.

In the second stage of the method according to the invention, the volume feeder continuously feeds plastic onto conveyor situated in the chamber of the degradation machine. The chamber of the degradation machine for plastics is the closed chamber, and its construction prevents inflow of oxygen into the chamber filled in with neutral gas, preferably nitrogen. Preferably, the said conveyor is a belt conveyor. Preferably, the conveyor has a form of a trough, and this trough may be divided into segments with crosswise walls inclined at an angle of ≥ 90° and <180°, situated at constant intervals, and preferably these walls are inclined towards the direction of the conveyor travel. Preferably, conveyor speed is constant. Preferably, drives of belt conveyor and volume feeder are connected with a limit switch in such a way, that stoppage of the belt conveyor will be associated with stoppage of the volume feeder. The drive of the belt conveyor is a motor encased in a bearing seating connected through a transmission gear and a clutch with a drive shaft of the feeder, and the bearing seating is situated preferably on the axis of the drive shaft of the belt conveyor. Preferably, the clutch situated on the axis of the drive shaft of the belt conveyor is a flexible clutch. The limit switch may have both a form of an electric switch to be switched on with the motor lifted by the drive shaft as well as a strain gauge measuring stresses. Blockade of the belt conveyor results in rise of a net torque of the drive shaft of the belt conveyor and in rotation of the seating containing the motor in relation to bearing points, and during such a rotation the seating mechanically changes the limit switch position. The conveyor relocates plastic from the area of feeding through the area of steam acceptance towards the area of heating, and a distance between surface of plastic under movement and surface of a heater and/or the assembly of heaters and/or the wall of degradation machine chamber separating the chamber of the degradation machine from the heater and/or the assembly of heaters is adjusted by means of correlating feed rates of plastics in the volume feeder and speeds of the conveyor travel in such a way that plastic waste under degradation at any moment do not contact the heater surface and/or the assembly of heaters and/or the wall of degradation machine chamber separating the chamber of the degradation machine from the heater and/or the assembly of heaters. In another example of making, heaters and/or assemblies of heaters are encased in cassettes that are permanently and tightly connected with the chamber of the degradation machine. This will enable replacement or repair of heating elements without any necessity to stop the process and unseal the chamber of the degradation machine. Preferably, the layer built by the feeder on the conveyor has identical thickness. When being moved within the area of heating, plastic is subjected to plasticization and changes its state of aggregation, and hydrocarbon particles contained in it change their state of aggregation into liquid, and then - gaseous one. Preferably, during plasticization and degradation of plastic, temperature in the chamber falls within the range of 630-650 °C. Preferably, relocation of gaseous products received from plastic waste degradation is conducted intrinsically towards the distillation column. In another option, in order to relocate gaseous products received from plastic waste degradation, a fan to force their movement towards the distillation column is used. It is also possible to apply pressure below atmospheric in the chamber of the degradation machine in order to relocate products received from waste plastic degradation, and the pressure is generated with a vacuum pump installed instead of the fan. It is also possible to apply a nitric "gaseous piston". In the third stage of the method according to the invention, gaseous products received as a result of plastic waste degradation undergo distillation in the distillation column, and respectively - a mixture of hydrocarbons in gaseous, liquid and solid state is obtained.
In the fourth stage, organic and inorganic impurities contained in the charge mass as well as coked plastic are being removed from the conveyor into the waste tank, preferably with a scraper. Preferably, the waste tank has the construction which is identical to the construction of the feeder and/or the feeders feeding the plant, and preferably the acceptance of waste is carried out within the system of two tanks having a construction of feeders situated one above the other.

The plant for degradation of plastics is composed of the degradation machine and the distillation column. The degradation machine for plastics contains: the chamber of the degradation machine, in which at least the following areas have been sectioned off: the area of feeding, the area of steam acceptance, the area of heating and the area of waste acceptance after processes of plastic degradation. The chamber of the degradation machine mates with the volume feeder, an outlet of which is situated in the area of feeding, and mates with the conveyor situated in the chamber of the degradation machine, which preferably is the belt conveyor. Preferably, the volume feeder is situated above the chamber of the degradation machine, its outlet is situated in the area of feeding, above the conveyor.

In another example of making, the volume feeder is fed from a volume forefeeder, situated directly above the feeder. The volume forefeeder is connected with the volume feeder hermetically, and preferably into the area where plastic is introduced into the feeder, a neutral gas is being introduced, preferably nitrogen. The volume feeder is provided with a shaft with radial blades. The shaft provided with blades and the internal surface of the feeder casing form together so called feeding cells. Between the blades and the internal surface of the feeder casing no airflow is possible. Preferably, the feeder cuts off any access of oxygen into plastic contained in it. Preferably, between the blades and an internal surface of the feeder casing, the additional packing is placed. The cells filled with plastic waste are relocated circumferentially until the lower position, where plastic wastes are dumped in the area of feeding on the conveyor situated in the chamber of the degradation machine. Preferably, the feeder itself enables simultaneous loading of the feeder along with feeding of the charge material contained in it. The chamber of the degradation machine is formed of hermetically closed passage, on a wall of which at least one heater, preferably the assembly of heaters is mounted, and this wall becomes an emitter of heat radiation. Preferably, the wall emitting heat radiation is the upper wall. Inside the chamber, the conveyor is situated on the surface of which troughs are placed, provided with crosswise walls forming an angle of ≥ 90° and >180° in relation to the bottom. Preferably, speed of troughs relocation is constant. Preferably, the layer built by the feeder in troughs has the identical thickness in the feeder area, above which the heaters are not situated. Preferably, the drives of belt conveyor and volume feeder are connected with a limit switch in such a way, that stoppage of the belt conveyor will be always associated with stoppage of the volume feeder. The drive of the belt conveyor is a motor encased in a bearing seating connected through a transmission gear and a clutch with a drive shaft of the conveyor, and the bearing seating is situated preferably on the axis of the drive shaft of the belt conveyor. Preferably, the clutch situated on the drive shaft of the belt conveyor is a flexible clutch. The limit switch may have both a form of an electric switch to be switched on with the motor lifted by the drive shaft as well as a strain gauge measuring stresses. Blockade of the belt conveyor results in rise of a net torque of the drive shaft of the belt conveyor and in rotation of the seating containing the motor in relation to bearing points, and during such a rotation the seating mechanically changes the limit switch position. When being moved within the area of heating, plastic is subjected to plasticization and changes its state of aggregation, and hydrocarbon particles contained in it change their state of aggregation into liquid, and then - gaseous one. Preferably, the upper plate of the chamber of the degradation machine is provided with a lengthwise clearance, above which a passage to exhaust volatile substances is situated. Preferably, the chamber of the degradation machine has been equipped with the fan to force movement of gaseous products received from plastic waste degradation towards the distillation column or when such a movement is being forced by the neutral gas introduced into the passage situated above the chamber. Under the conveyor, on the opposite side in relation to the area of feeding, the waste tank is installed which preferably constitutes an integral part of the chamber of the degradation machine.

Preferably, under the conveyor there is the scraper, which preferably constitutes an integral part of the conveyor. When the waste tank not constituting a part of the degradation machine is used, then it is connected with the chamber of the degradation machine by means of the air-lock preventing inflow of oxygen into the chamber of the degradation machine. Preferably, the waste tank has the construction which is identical to the construction of the feeder and/or the feeders feeding the plant, and preferably the acceptance of waste is carried out within the system of two tanks having a construction of feeders situated one above the other.

Preferably, the volume feeder, the chamber of the degradation machine and at least one waste tank are placed in the closed, hermetic casing with neutral gas atmosphere in its inside. Preferably, this casing is provided with openings enabling technical access to the plant inside without any necessity to remove air-tight sealing.

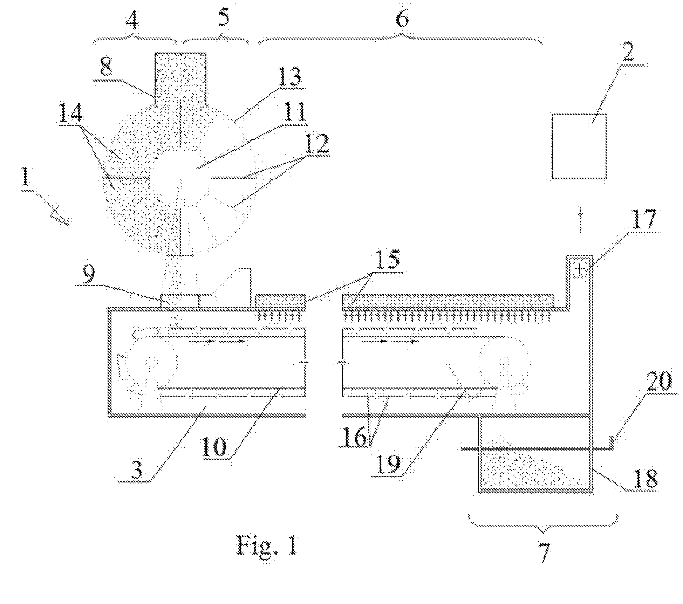

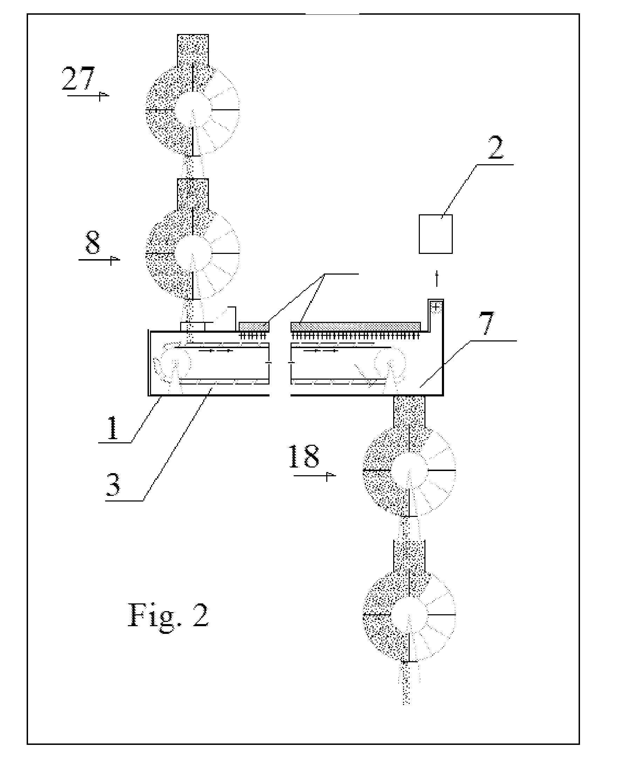

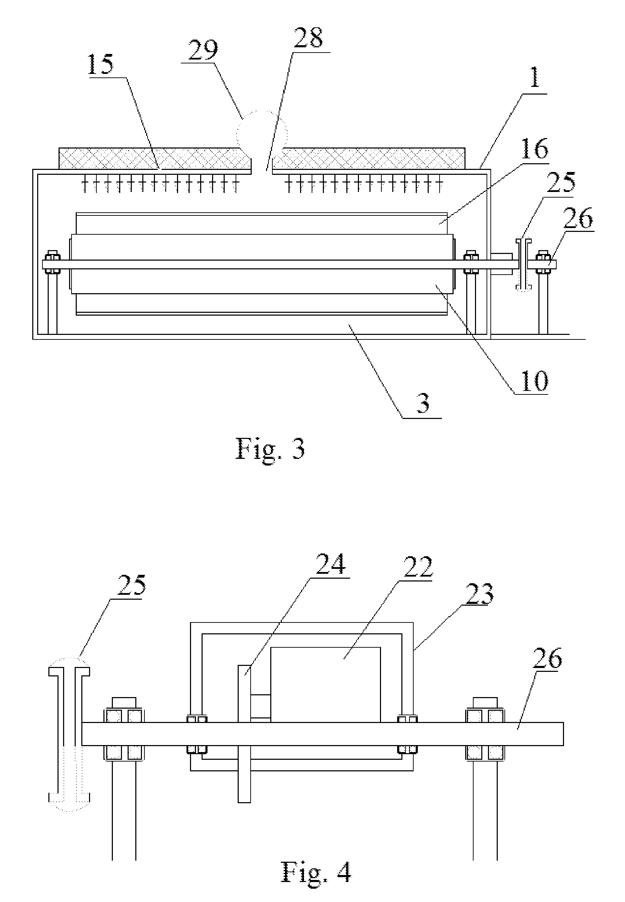

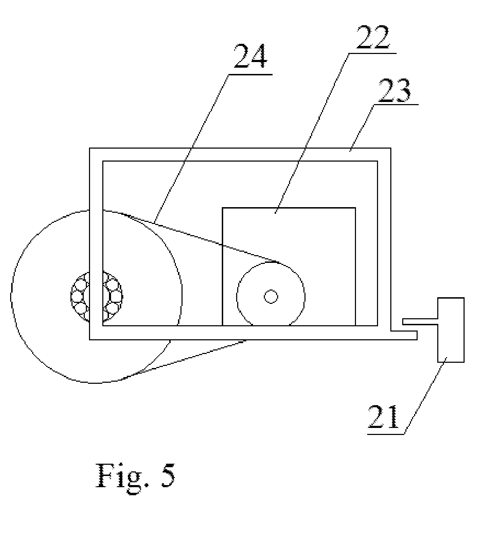

The method of degradation of plastics and the plant for degradation of plastics have been presented in the figures, where Fig.1 presents the plant for degradation of plastics, Fig.2 presents the plant for degradation of plastics with two feeders to feed the process of degradation and provided with the twin-unit of after-process waste acceptance, Fig. 3 presents a section of the chamber of the degradation machine, provided with a passage to accept after-process volatile products, Fig. 4 presents longitudinal section across the drive shaft of the belt conveyor in the power transmission unit of the conveyor belt along with the limit switch, Fig. 5 presents cross-section of the power transmission unit of the belt conveyor along with the limit switch.

### Example I

The plant for degradation of plastics is composed of the plastics degradation machine 1 and the distillation column 2. The plastics degradation machine (1) contains the chamber 3 of the degradation machine 1, in which at least the following areas have been sectioned off: the area of feeding 4, the area of steam acceptance 5, the area of heating 6 and the area of waste acceptance after processes of plastic degradation 7. Above the chamber 3 of the degradation machine 1, the volume feeder 8 is situated provided with the outlet 9 situated in the area of feeding 4, that mates with the conveyor 10 situated in the chamber 3 of the degradation machine 1.
The volume feeder 8 is provided with the shaft 11 with radial blades 12. The shaft 11 of the feeder 8 provided with blades 12, and the internal surface of the casing 13 of the feeder 8 form together so called feeding cells 14. Between the blades 12 and the internal surface of the casing 13 of the feeder 8 no airflow is possible. Into the feeding cells 14 when they are in their upper position, grinded material - plastic waste - is being introduced (continuous feeding). In another example of making, between the blades 12 and an internal surface of the casing 13 of the feeder 8, the additional packing is placed. The feeding cells 14 filled with plastic waste are relocated circumferentially until the lower position, where plastic wastes are dumped through the outlet 9 of the feeder 8 in the area of feeding on the conveyor 10 situated in the chamber 3 of the degradation machine 1. The feeder 8 itself enables simultaneous loading of the feeder 8 along with feeding the charge material contained in it on the conveyor 10. The chamber 3 of the degradation machine 1 is formed of hermetically closed passage, in the wall 15 of which a heating element - the assembly of heaters - is mounted, and as the result of this the said wall becomes an emitter of heat radiation. On the surface of the conveyor 10, troughs 16 are placed provided with crosswise walls forming an angle of ≥ 90° and >180° in relation to the bottom. The layer built by the feeder 8 in troughs 16 has the identical thickness in the area of feeding 4, above which the heaters are not situated. When being moved within the area of heating 6, plastic is subjected to plasticization and changes its state of aggregation, and hydrocarbon particles contained in it change their state of aggregation into liquid, and then - gaseous one. The chamber 3 of the degradation machine 1 has been equipped with the fan 17 to force movement of gaseous products received from plastic waste degradation towards the distillation column 2. Under the conveyor 10, on the opposite side in relation to the area of feeding 4, the waste tank 18 is installed which constitutes an integral part of the chamber 3 of the degradation machine 1.

Under the conveyor 10 there is the scraper 19. The waste tank 18 is connected with the chamber 3 of the degradation machine 1 by means of the air-lock 20 preventing inflow of oxygen into the chamber 3 of the degradation machine 1. Thanks to this, during emptying of the waste tank 18 through the outlet hatch (not presented in the figure) oxygen does not get inside the chamber 3 of the degradation machine 1.

### Example II

The plant for degradation of plastics is composed of the plastics degradation machine 1 and the distillation column 2. The plastics degradation machine (1) contains the chamber 3 of the degradation machine 1, in which at least the following areas have been sectioned off: the area of feeding 4, the area of steam acceptance 5, the area of heating 6 and the area of waste acceptance after processes of plastic degradation 7. Above the chamber 3 of the degradation machine 1, the volume feeder 8 is situated provided with the outlet 9 situated in the area of feeding 4, that mates with the conveyor 10 situated in the chamber 3 of the degradation machine 1.

The volume feeder 8 is provided with the shaft 11 with radial blades 12. The shaft 11 of the feeder 8 provided with blades 12, and the internal surface of the casing 13 of the feeder 8 form together so called feeding cells 14. Between the blades 12 and the internal surface of the casing 13 of the feeder 8 no airflow is possible. Into the feeding cells 14 when they are in their upper position, grinded material - plastic waste - is being introduced (continuous feeding). The feeding cells 14 filled with plastic waste are relocated circumferentially until the lower position, where plastic wastes are dumped through the outlet 9 of the feeder 8 in the area of feeding on the conveyor 10 situated in the chamber 3 of the degradation machine 1. The feeder 8 itself enables simultaneous loading of the feeder 8 along with feeding the charge material contained in it on the conveyor 10.

The chamber 3 of the degradation machine 1 is formed of hermetically closed passage, in the wall 15 of which a heating element - the assembly of heaters - is mounted, and as the result of this the said wall becomes an emitter of heat radiation. On the surface of the conveyor 10, troughs 16 are placed provided with crosswise walls forming an angle of ≥ 90° and >180° in relation to the bottom. The drives of belt conveyor 10 and volume feeder 8 are connected with the limit switch 21 in such a way, that stoppage of the belt conveyor 10 will be always associated with stoppage of the volume feeder 8. The drive of the belt conveyor 10 is the motor 22 encased in a bearing seating 23 connected through the transmission gear 24 and the clutch 25 with the drive shaft 26 of the conveyor 10, and the bearing seating 23 is situated on the drive shaft 26 of the belt conveyor 10. The limit switch 21 may have both a form of an electric switch to be switched on with the motor 22 lifted by the drive shaft 26 and the seating 23 of the motor 22. Blockade of the belt conveyor 10 results in rise of torque of the drive shaft 26 of the belt conveyor 10 and in rotation of the seating 23 containing the motor 22 in relation to the bearing points, and during such a rotation the seating mechanically changes position of the limit switch 21.

The layer built by the feeder 8 in troughs 16 has the identical thickness in the area of feeding 4, above which the heaters are not situated. When being moved within the area of heating 6, plastic is subjected to plasticization and changes its state of aggregation, and hydrocarbon particles contained in it change their state of aggregation into liquid, and then - gaseous one. The chamber 3 of the degradation machine 1 has been equipped with the fan 17 to force movement of gaseous products received from plastic waste degradation towards the distillation column 2. Under the conveyor 10, on the opposite side in relation to the area of feeding 4, the waste tank 18 is installed which constitutes an integral part of the chamber 3 of the degradation machine 1.

Under the conveyor 10 there is the scraper 19. The waste tank 18 is connected with the chamber 3 of the degradation machine 1 by means of the air-lock 20 preventing inflow of oxygen into the chamber 3 of the degradation machine 1. Thanks to this, during emptying of the waste tank 18 through the outlet hatch (not presented in the figure) oxygen does not get inside the chamber 3 of the degradation machine 1.

### Example III

The plant for degradation of plastics is composed of the plastics degradation machine 1 and the distillation column 2. The plastics degradation machine (1) contains the chamber 3 of the degradation machine 1, in which at least the following areas have been sectioned off: the area of feeding 4, the area of steam acceptance 5, the area of heating 6 and the area of waste acceptance after processes of plastic degradation 7. Above the chamber 3 of the degradation machine 1, the volume feeder 8 is situated provided with the outlet 9 situated in the area of feeding 4, that mates with the conveyor 10 situated in the chamber 3 of the degradation machine 1.

The volume feeder 8 is fed from a volume forefeeder 27, situated directly above the feeder 8. The volume forefeeder 27 is connected with the volume feeder 8 hermetically, and into the area where plastic is introduced into the feeder 8, a neutral gas is being introduced.

The volume feeder 8 is provided with the shaft 11 with radial blades 12. The shaft 11 of the feeder 8 provided with blades 12, and the internal surface of the casing 13 of the feeder 8 form together so called feeding cells 14. Between the blades 12 and the internal surface of the casing 13 of the feeder 8 no airflow is possible. Into the feeding cells 14 when they are in their upper position, grinded material - plastic waste - is being introduced (continuous feeding). The feeding cells 14 filled with plastic waste are relocated circumferentially until the lower position, where plastic wastes are dumped through the outlet 9 of the feeder 8 in the area of feeding on the conveyor 10 situated in the chamber 3 of the degradation machine 1. The feeder 8 itself enables simultaneous loading of the feeder 8 along with feeding the charge material contained in it on the conveyor 10.

The chamber 3 of the degradation machine 1 is formed of hermetically closed passage, in the wall 15 of which a heating element - the assembly of heaters - is mounted, and as the result of this the said wall becomes an emitter of heat radiation. On the surface of the conveyor 10, troughs 16 are placed provided with crosswise walls forming an angle of ≥ 90° and >180° in relation to the bottom. The drives of belt conveyor 10 and volume feeder 8 are connected with the limit switch 21 in such a way, that stoppage of the belt conveyor 10 will be always associated with stoppage of the volume feeder 8. The drive of the belt conveyor 10 is the motor 22 encased in a bearing seating 23 connected through the transmission gear 24 and the clutch 25 with the drive shaft 26 of the conveyor 10, and the bearing seating 23 is situated on the drive shaft 26 of the belt conveyor 10. The limit switch 21 may have both a form of an electric switch to be switched on with the motor 22 lifted by the drive shaft 26 and the seating 23 of the motor 22. Blockade of the belt conveyor 10 results in rise of torque of the drive shaft 26 of the belt conveyor 10 and in rotation of the seating 23 containing the motor 22 in relation to the bearing points, and during such a rotation the seating mechanically changes position of the limit switch 21.

The layer built by the feeder 8 in troughs 16 has the identical thickness in the area of feeding 4, above which the heaters are not situated. When being moved within the area of heating 6, plastic is subjected to plasticization and changes its state of aggregation, and hydrocarbon particles contained in it change their state of aggregation into liquid, and then - gaseous one. The chamber 3 of the degradation machine 1 has been equipped with the fan 17 to force movement of gaseous products received from plastic waste degradation towards the distillation column 2. Under the conveyor 10, on the opposite side in relation to the area of feeding 4, the waste tank 18 is installed which constitutes an integral part of the chamber 3 of the degradation machine 1.

Under the conveyor 10 there is the scraper 19. The waste tank 18 is connected with the chamber 3 of the degradation machine 1 by means of the air-lock 20 preventing inflow of oxygen into the chamber 3 of the degradation machine 1. Thanks to this, during emptying of the waste tank 18 through the outlet hatch (not presented in the figure) oxygen does not get inside the chamber 3 of the degradation machine 1.

### Example IV

The plant for degradation of plastics is composed of the plastics degradation machine 1 and the distillation column 2. The plastics degradation machine (1) contains the chamber 3 of the degradation machine 1, in which at least the following areas have been sectioned off: the area of feeding 4, the area of steam acceptance 5, the area of heating 6 and the area of waste acceptance after processes of plastic degradation 7. Above the chamber 3 of the degradation machine 1, the volume feeder 8 is situated provided with the outlet 9 situated in the area of feeding 4, that mates with the conveyor 10 situated in the chamber 3 of the degradation machine 1.

The volume feeder 8 is fed from a volume forefeeder 27, situated directly above the feeder 8. The volume forefeeder 27 is connected with the volume feeder 8 hermetically, and into the area where plastic is introduced into the feeder 8, a neutral gas is being introduced.

The volume feeder 8 is provided with the shaft 11 with radial blades 12. The shaft 11 of the feeder 8 provided with blades 12, and the internal surface of the casing 13 of the feeder 8 form together so called feeding cells 14. Between the blades 12 and the internal surface of the casing 13 of the feeder 8 no airflow is possible. Into the feeding cells 14 when they are in their upper position, grinded material - plastic waste - is being introduced (continuous feeding). The feeding cells 14 filled with plastic waste are relocated circumferentially until the lower position, where plastic wastes are dumped through the outlet 9 of the feeder 8 in the area of feeding on the conveyor 10 situated in the chamber 3 of the degradation machine 1. The feeder 8 itself enables simultaneous loading of the feeder 8 along with feeding the charge material contained in it on the conveyor 10.

The chamber 3 of the degradation machine 1 is formed of hermetically closed passage, in the wall 15 of which a heating element - the assembly of heaters - is mounted, and as the result of this the said wall becomes an emitter of heat radiation. On the surface of the conveyor 10, troughs 16 are placed provided with crosswise walls forming an angle of ≥ 90° and >180° in relation to the bottom. The drives of belt conveyor 10 and volume feeder 8 are connected with the limit switch 21 in such a way, that stoppage of the belt conveyor 10 will be always associated with stoppage of the volume feeder 8. The drive of the belt conveyor 10 is the motor 22 encased in a bearing seating 23 connected through the transmission gear 24 and the clutch 25 with the drive shaft 26 of the conveyor 10, and the bearing seating 23 is situated on the drive shaft 26 of the belt conveyor 10. The limit switch 21 may have both a form of an electric switch to be switched on with the motor 22 lifted by the drive shaft 26 and the seating 23 of the motor 22. Blockade of the belt conveyor 10 results in rise of torque of the drive shaft 26 of the belt conveyor 10 and in rotation of the seating 23 containing the motor 22 in relation to the bearing points, and during such a rotation the seating mechanically changes position of the limit switch 21.

The layer built by the feeder 8 in troughs 16 has the identical thickness in the area of feeding 4, above which the heaters are not situated. When being moved within the area of heating 6, plastic is subjected to plasticization and changes its state of aggregation, and hydrocarbon particles contained in it change their state of aggregation into liquid, and then - gaseous one. The chamber 3 of the degradation machine 1 has been equipped with the fan 17 to force movement of gaseous products received from plastic waste degradation towards the distillation column 2. Under the conveyor 10, on the opposite side in relation to the area of feeding 4, the waste tank 18 is installed which constitutes an integral part of the chamber 3 of the degradation machine 1.

Under the conveyor 10 there is the scraper 19. The waste tank 18 is connected with the chamber 3 of the degradation machine 1 by means of the air-lock 20 preventing inflow of oxygen into the chamber 3 of the degradation machine 1. Thanks to this, during emptying of the waste tank 18 through the outlet hatch (not presented in the figure) oxygen does not get inside the chamber 3 of the degradation machine 1.

The waste tank 18 has the construction which is identical to the construction of the feeder 8 and/or the feeders 8 and 27 feeding the plant.

### Example V

The plant for degradation of plastics is composed of the plastics degradation machine 1 and the distillation column 2. The plastics degradation machine (1) contains the chamber 3 of the degradation machine 1, in which at least the following areas have been sectioned off: the area of feeding 4, the area of steam acceptance 5, the area of heating 6 and the area of waste acceptance after processes of plastic degradation 7. Above the chamber 3 of the degradation machine 1, the volume feeder 8 is situated provided with the outlet 9 situated in the area of feeding 4, that mates with the conveyor 10 situated in the chamber 3 of the degradation machine 1.

The volume feeder 8 is fed from a volume forefeeder 27, situated directly above the feeder 8. The volume forefeeder 27 is connected with the volume feeder 8 hermetically, and into the area where plastic is introduced into the feeder 8, a neutral gas is being introduced.

The volume feeder 8 is provided with the shaft 11 with radial blades 12. The shaft 11 of the feeder 8 provided with blades 12, and the internal surface of the casing 13 of the feeder 8 form together so called feeding cells 14. Between the blades 12 and the internal surface of the casing 13 of the feeder 8 no airflow is possible. Into the feeding cells 14 when they are in their upper position, grinded material - plastic waste - is being introduced (continuous feeding). The feeding cells 14 filled with plastic waste are relocated circumferentially until the lower position, where plastic wastes are dumped through the outlet 9 of the feeder 8 in the area of feeding on the conveyor 10 situated in the chamber 3 of the degradation machine 1. The feeder 8 itself enables simultaneous loading of the feeder 8 along with feeding the charge material contained in it on the conveyor 10.

The chamber 3 of the degradation machine 1 is formed of hermetically closed passage, in the wall 15 of which a heating element - the assembly of heaters - is mounted, and as the result of this the said wall becomes an emitter of heat radiation. On the surface of the conveyor 10, troughs 16 are placed provided with crosswise walls forming an angle of ≥ 90° and >180° in relation to the bottom. The drives of belt conveyor 10 and volume feeder 8 are connected with the limit switch 21 in such a way, that stoppage of the belt conveyor 10 will be always associated with stoppage of the volume feeder 8. The drive of the belt conveyor 10 is the motor 22 encased in a bearing seating 23 connected through the transmission gear 24 and the clutch 25 with the drive shaft 26 of the conveyor 10, and the bearing seating 23 is situated on the drive shaft 26 of the belt conveyor 10. The limit switch 21 may have both a form of an electric switch to be switched on with the motor 22 lifted by the drive shaft 26 and the seating 23 of the motor 22. Blockade of the belt conveyor 10 results in rise of torque of the drive shaft 26 of the belt conveyor 10 and in rotation of the seating 23 containing the motor 22 in relation to the bearing points, and during such a rotation the seating mechanically changes position of the limit switch 21.

The layer built by the feeder 8 in troughs 16 has the identical thickness in the area of feeding 4, above which the heaters are not situated. When being moved within the area of heating 6, plastic is subjected to plasticization and changes its state of aggregation, and hydrocarbon particles contained in it change their state of aggregation into liquid, and then - gaseous one. The chamber 3 of the degradation machine 1 has been equipped with the fan 17 to force movement of gaseous products received from plastic waste degradation towards the distillation column 2. Under the conveyor 10, on the opposite side in relation to the area of feeding 4, the waste tank 18 is installed which constitutes an integral part of the chamber 3 of the degradation machine 1.

Under the conveyor 10 there is the scraper 19. The waste tank 18 is connected with the chamber 3 of the degradation machine 1 by means of the air-lock 20 preventing inflow of oxygen into the chamber 3 of the degradation machine 1. Thanks to this, during emptying of the waste tank 18 through the outlet hatch (not presented in the figure) oxygen does not get inside the chamber 3 of the degradation machine 1.

The waste tank 18 has the construction which is identical to the construction of the feeder 8 and/or the feeders 8 and 27 feeding the plant.

The volume feeder 8, the degradation machine for plastics 1 and the waste tank 18 are placed in the closed, hermetic casing with neutral gas atmosphere in its inside. This casing is provided with openings enabling technical access to the plant inside without any necessity to remove air-tight sealing.

### Example VI

The plant for degradation of plastics is composed of the plastics degradation machine 1 and the distillation column 2. The plastics degradation machine (1) contains the chamber 3 of the degradation machine 1, in which at least the following areas have been sectioned off: the area of feeding 4, the area of steam acceptance 5, the area of heating 6 and the area of waste acceptance after processes of plastic degradation 7. Above the chamber 3 of the degradation machine 1, the volume feeder 8 is situated provided with the outlet 9 situated in the area of feeding 4, that mates with the conveyor 10 situated in the chamber 3 of the degradation machine 1.

The volume feeder 8 is fed from a volume forefeeder 27, situated directly above the feeder 8. The volume forefeeder 27 is connected with the volume feeder 8 hermetically, and into the area where plastic is introduced into the feeder 8, a neutral gas is being introduced.

The volume feeder 8 is provided with the shaft 11 with radial blades 12. The shaft 11 of the feeder 8 provided with blades 12, and the internal surface of the casing 13 of the feeder 8 form together so called feeding cells 14. Between the blades 12 and the internal surface of the casing 13 of the feeder 8 no airflow is possible. Into the feeding cells 14 when they are in their upper position, grinded material - plastic waste - is being introduced (continuous feeding). The feeding cells 14 filled with plastic waste are relocated circumferentially until the lower position, where plastic wastes are dumped through the outlet 9 of the feeder 8 in the area of feeding on the conveyor 10 situated in the chamber 3 of the degradation machine 1. The feeder 8 itself enables simultaneous loading of the feeder 8 along with feeding the charge material contained in it on the conveyor 10.

The chamber 3 of the degradation machine 1 is formed of hermetically closed passage, in the wall 15 of which a heating element - the assembly of heaters - is mounted, and as the result of this the said wall becomes an emitter of heat radiation. The upper plate of the chamber of the degradation machine 1 is provided with the lengthwise clearance 28, above which the passage 29 to exhaust volatile substances is situated. On the surface of the conveyor 10, troughs 16 are placed provided with crosswise walls forming an angle of ≥ 90° and >180° in relation to the bottom. The drives of belt conveyor 10 and volume feeder 8 are connected with the limit switch 21 in such a way, that stoppage of the belt conveyor 10 will be always associated with stoppage of the volume feeder 8. The drive of the belt conveyor 10 is the motor 22 encased in a bearing seating 23 connected through the transmission gear 24 and the clutch 25 with the drive shaft 26 of the conveyor 10, and the bearing seating 23 is situated on the drive shaft 26 of the belt conveyor 10. The limit switch 21 may have both a form of an electric switch to be switched on with the motor 22 lifted by the drive shaft 26 and the seating 23 of the motor 22. Blockade of the belt conveyor 10 results in rise of torque of the drive shaft 26 of the belt conveyor 10 and in rotation of the seating 23 containing the motor 22 in relation to the bearing points, and during such a rotation the seating mechanically changes position of the limit switch 21.

The layer built by the feeder 8 in troughs 16 has the identical thickness in the area of feeding 4, above which the heaters are not situated. When being moved within the area of heating 6, plastic is subjected to plasticization and changes its state of aggregation, and hydrocarbon particles contained in it change their state of aggregation into liquid, and then - gaseous one. The chamber 3 of the degradation machine 1 has been equipped with the fan 17 to force movement of gaseous products received from plastic waste degradation towards the distillation column 2. Under the conveyor 10, on the opposite side in relation to the area of feeding 4, the waste tank 18 is installed which constitutes an integral part of the chamber 3 of the degradation machine 1.

Under the conveyor 10 there is the scraper 19. The waste tank 18 is connected with the chamber 3 of the degradation machine 1 by means of the air-lock 20 preventing inflow of oxygen into the chamber 3 of the degradation machine 1. Thanks to this, during emptying of the waste tank 18 through the outlet hatch (not presented in the figure) oxygen does not get inside the chamber 3 of the degradation machine 1.

The waste tank 18 has the construction which is identical to the construction of the feeder 8 and/or the feeders 8 and 27 feeding the plant.

The volume feeder 8, the degradation machine for plastics 1 and the waste tank 18 are placed in the closed, hermetic casing with neutral gas atmosphere in its inside. This casing is provided with openings enabling technical access to the plant inside without any necessity to remove air-tight sealing.

## Claims

1. The method of degradation of plastics **characterized in that** not purified and not segregated raw-material - plastic waste - is being grinded, and the charge material received as a result of grinding, with continuous feeding is being introduced into the volume feeder (8), which then with continuous feeding feeds the charge material on the conveyor (10) situated in the chamber (3) of the degradation machine (1) being filled with neutral gas, the conveyor (10) relocates plastic from the area of feeding (4) through the area of steam acceptance (5) towards the area of heating (6), and a distance between surface of plastic under movement and surface of a heater and/or the assembly of heaters and/or the wall of the chamber (3) of the degradation machine (1), separating the chamber (3) of the degradation machine (1) from the heater and/or the assembly of heaters is adjusted by means of correlating feed rates of plastics in the volume feeder (8) and speeds of the conveyor (10) travel in such a way that plastic waste under degradation at any moment do not contact the heater surface and/or the assembly of heaters and/or the wall of the chamber (3) of the degradation machine (1) chamber separating the chamber (3) of the degradation machine (1) from the heater and/or the assembly of heaters, when being moved within the area of steam acceptance (5), steam obtained from plastic waste is being accepted by means of suction, then when being moved within the area of heating (6), plastic is subjected to plasticization and changes its state of aggregation, and hydrocarbon particles contained in it change their state of aggregation into liquid, and next - gaseous one, relocation of gaseous products received from plastic waste degradation is conducted intrinsically towards the distillation column (2), and gaseous products received as a result of plastic waste degradation undergo distillation in the distillation column (2), and organic and inorganic impurities contained in the charge mass as well as coked plastic are being removed from the conveyor (10) into the waste tank (18).

2. The method according to the claim 1 , **characterized in that** the grinding process is carried out in the cutting shredder of any kind.

3. The method according to the claim 2, **characterized in that** the grinding process is carried out in the twin-shaft shredder.

4. The method according to the claims 1 or 2 or 3 or 4, **characterized in that** such feeder cuts down access of oxygen into the chamber (3) of the degradation machine (1), which is connected with the feeder.

5. The method according to the claims 1 or 2 or 3 or 4 or 5, **characterized in that** the feeder (8) construction itself enables simultaneous loading of the feeder (8) along with feeding of the charge material contained in it.

6. The method according to the claims 1 or 2 or 3 or 4 or 5 or 6, **characterized in that** the conveyor (10) is a belt conveyor.

7. The method according to the claim 7, **characterized in that** the conveyor (10) the conveyor has a form of a trough.

8. The method according to the claim 8, **characterized in that** and the trough (16) of the conveyor (10) is divided into segments with crosswise walls inclined at an angle of ≥ 9^{0°} and <18⁰°, situated at constant intervals, and preferably the walls are inclined towards the direction of the conveyor travel. Preferably, the conveyor speed is constant.

9. The method according to the claim 1 or 6 or 7 or 8, **characterized in that** the conveyor (10) travel speed is constant.

10. The method according to the claim 1 or 6 or 7 or 8 or 9, **characterized in that** the layer built by the feeder (8) on the conveyor (10) has the identical thickness.

11. The method according to any claim from 1 up to 10, **characterized in that** during plasticization and degradation of plastic, temperature in the chamber (4) falls within the range of 630-650 °C.

12. The method according to any claim from 1 up to 10, **characterized in that** in order to relocate gaseous products received from plastic waste degradation, the fan (17) to force their movement towards the distillation column (2) is used.

13. The method according to any claim from 1 up to 10, **characterized in that** in order to relocate gaseous products received from plastic waste, the pressure below atmospheric in the chamber of the degradation machine is applied, which is generated with a vacuum pump.

14. The method according to any claim from 1 up to 10, **characterized in that** in order to relocate gaseous products received from plastic waste, the "gaseous piston" is used.

15. The method according to any claim from 1 up to 14, **characterized in that** organic and inorganic impurities contained in the charge mass as well as coked plastic are being removed from the conveyor into the waste tank with the scraper (19).

16. The plant for degradation of plastics composed of the degradation machine and the distillation column, **characterized in that** the degradation machine (1) for plastics contains: the chamber (3) of the degradation machine (1) , in which at least the following areas have been sectioned off:
the area of feeding (4), the area of steam acceptance (5), the area of heating (6) and the area of waste acceptance (7) after processes of plastic degradation, and the chamber (3) of the degradation machine (1) mates with the volume feeder (8), an outlet of which is situated in the area of feeding (4), and mates with the conveyor (10) situated in the chamber (3) of the degradation machine (1), and under the conveyor (10), on the opposite side in relation to the area of feeding (4), the waste tank (18) is installed that is connected with the chamber (3) of the degradation machine (1) by means of the air-lock (20) preventing inflow of oxygen.

17. The plant according to the claim 16, **characterized in that** the conveyor (10) situated in the chamber (3) of the degradation machine (1) is the belt conveyor.

18. The plant according to the claim 16 or 17, **characterized in that** the volume feeder (8) is situated above the chamber (3) of the degradation machine (1), and its outlet is situated in the area of feeding (4) , above the conveyor (10) situated in the chamber (3) of the degradation machine (1).

19. The plant according to the claim 16 or 17 or 18, **characterized in that** the volume feeder (7) is provided with the shaft (11) with radial blades (12).

20. The plant according to the claim 19, **characterized in that** the shaft (11) of the feeder (8) provided with the blades (12), and the internal surface of the casing (13) of the feeder (8) form together the o called feeding cells (14), and between the blades (12) and the internal surface of the casing (13) of the feeder (8) no airflow is possible, and the cells (14) filled with plastic waste are relocated circumferentially until the lower position, where plastic wastes are dumped in the area of feeding (4) on the conveyor (10) situated in the chamber (3) of the degradation machine (1).

21. The plant according to the claim 20, **characterized in that** the feeder (8) cuts off any access of oxygen into plastic contained in it.

22. The plant according to the claim 21, **characterized in that** between the blades (12) and internal surface of the casing (13) of the feeder (8), the additional packing is placed.

23. The plant according to the claims 18 or 19 or 20 or 21 or 22, **characterized in that** construction of the feeder (8) itself enables simultaneous loading of the feeder (8) along with feeding of the charge material contained in it.

24. The plant according to the claims 18 or 19 or 20 or 21 or 22 or 23, **characterized in that** the chamber (3) of the degradation machine (1) is formed of hermetically closed passage, in the wall (15) of which at least one heater is mounted, and this wall becomes an emitter of heat radiation.

25. The plant according to the claim 24, **characterized in that** in the wall (15) of the chamber (3) of the degradation machine (1), the assembly of heaters is mounted.

26. The plant according to the claims 24 or 25, **characterized in that** the wall (15) emitting heat radiation is the upper wall.

27. The plant according to the claims 16 or 17 or 18 or 19 or 20 or 21 or 22 or 23 or 24 or 25 or 26, **characterized in that** on the surface of the conveyor (10) situated in the chamber (3) of the degradation machine (1), the troughs (16) are placed provided with crosswise walls forming an angle of ≥ 90° and >180° in relation to the bottom.

28. The plant according to the claim 27, **characterized in that** the speed of troughs (16) relocation is constant.

29. The plant according to any claim from 16 up to 28, **characterized in that** the chamber (3) of the degradation machine (1) has been equipped with the fan (17) to force movement of gaseous products received from plastic waste degradation towards the distillation column (2).

30. The plant according to any claim from 16 up to 29, **characterized in that** the waste tank (18) constitutes an integral part of the chamber (3) of the degradation machine (1).

31. The plant according to any claim from 16 up to 29, **characterized in that** under the conveyor (10) at least one scraper (19) is situated.
